# EUROPEAN PATENT APPLICATION

(11) **EP 4 398 399 A1**
(43) Date of publication of application: **10.07.2024**
(21) Application number: 23150264.2
(22) Date of filing: 04.01.2023
(51) Int. Cl.: H01M 50/35, H01M 50/375, H01M 50/204, H01M 50/358

(54) **A BATTERY ARRANGEMENT FOR A VEHICLE**

(71) Applicant: VOLVO TRUCK CORPORATION, 405 08 Göteborg (SE)
(72) Inventor: MITCHELL-DOWNIE, LEWIS, Göteborg 43658 (SE)
(74) Representative: Germain Maureau

(57) **Abstract**

The battery arrangement (1) comprises:
- a battery pack (2) including a plurality of cells received in a housing (3) having exhaust ports (6) through which gases emitted by the cells can flow out in case of a failure such as a thermal runaway,
- a sensor (7) for detecting said failure,
- a safety system (9) comprising:
-- a pipe (10) having a first end (11) secured to the battery pack so as to collect the gases emitted through the exhaust port, and a second end (12), wherein the pipe can be in an inactive state in which it is collapsed, or in an active state in which it is extended to conduct the gases to a safer zone,
-- an extension causing device configured to place the pipe (10) in the active state upon detection of said failure.

## Description

### TECHNICAL FIELD

The disclosure relates generally to the safety of vehicles equipped with battery packs. In particular aspects, the disclosure relates to a battery arrangement for a vehicle. The disclosure also concerns a vehicle including such a battery arrangement, and a method for securing a vehicle including at least one battery pack in case of a failure such as a thermal runaway of said battery pack. The disclosure can be applied in heavy-duty vehicles, such as trucks, buses, and construction equipment. Although the disclosure may be described with respect to a particular vehicle, the disclosure is not restricted to any particular vehicle.

### BACKGROUND

The gases released by a battery pack during a failure such as a thermal runaway are toxic and hot. They may further have a fairly high pressure and potentially explosive properties. Therefore, it is not desirable that these gases stay close to people, evacuation routes, critical equipment, etc. or accumulate in a reduced or poorly ventilated area.

It is known to guide these gases away, to a safer zone. However, the packaging of battery packs is often tight and complex, which prevents the addition of permanent ducting with appropriate properties (heat resistance, size, etc.). According to other known solutions, there is provided a pipe that is inflated by the flow of these gases and that direct these gases to a safer place. However, such a solution is not fully satisfactory, in particular in terms of gases evacuation speed.

### SUMMARY

According to a first aspect, the disclosure concerns a battery arrangement for a vehicle, comprising:
- a battery pack including a housing and a plurality of cells received in the housing, the housing having at least one exhaust port through which gases emitted by the cells can flow out of the housing in case of a failure such as a thermal runaway,
- a sensor configured to enable detecting said failure of the battery pack,
- a safety system comprising:
   -- a pipe having open ends, namely a first end which is secured to the battery pack so as to collect the gases emitted through the exhaust port, and a second end, wherein the pipe can be in an inactive state in which it is collapsed so as to occupy a small space, or in an active state in which it is extended so that the gases can flow through the pipe and exit it at the second end then located away from the first end,
   -- an extension causing device configured to place the pipe in the active state upon detection of said failure.

Thus, the pipe can move from its inactive state to its active state under the effect of an extension causing device. Such a device preferably operates independently of the flow of gases emitted during a thermal runaway or another failure. In other words, it is not the flow of gases that causes, or at least not alone, the pipe to be placed in the active state. Achieving the pipe extension by means of a device that is independent of the flow of gases makes it possible to reduce the response time. In other words, the pipe reaches its active state quicker, as compared to a prior art implementation in which the pipe is inflated by the flow of these gases. This avoids risks of having these gases accumulate near the battery pack, which ultimately improves safety.

It is specified that the gases can subsequently contribute to extend the pipe, for example by increasing its cross-section by inflating the pipe, but it is not the flow of gases that causes on its own the extension of the pipe.

The fact that the pipe extension is triggered by the detection of a failure also contributes to improving the response time, as the delay between the occurrence of the incident and the beginning of the extension of the pipe is reduced. In this application, the term "failure" means a problem of the battery pack that leads to the emission of gases above a predetermined temperature, pressure and/or amount.

The sensor can monitor a parameter, which includes continuously measuring said parameter, measuring said parameter at predetermined intervals, or responding above or below a predetermined threshold of a parameter. The concerned parameter is suitable for detecting a failure such as a thermal runaway of the battery pack. For example, a predetermined value or evolution of the parameter can be representative of the occurrence of a thermal runaway.

In operation, in the active state of the pipe, the second end is located in a safer zone, i.e. at a distance from critical equipment and people that is sufficient to prevent or limit damages or injuries. For example, the second end can be located at least one meter away from the first end.

Starting from the inactive state, placing the pipe in the active state may consist in moving the second end of the pipe away from the first end, in order to extend the pipe. The extension causing device can be an active or a passive device.

In the inactive state, the pipe second end can be close to the pipe first end, or substantially adjacent said pipe first end. Alternatively or in addition, in the inactive state, the pipe second end can be facing the pipe first end. In the inactive state, the pipe may be folded or rolled.

The pipe may comprise spacers for keeping the cross-section of the pipe in a non-flattened state at least in the active state. Such spacers can include peripheral rings which are spaced apart from each other, preferably regularly.

The pipe may have a non-flattened cross-section both in the inactive state and in the active state. Said non-flattened cross-section can be substantially identical in the inactive state and in the active state.

In an example, in the mounted position on a vehicle and in the active state, the pipe extends at least partly vertically and downwards from its first end towards its second end. Such an implementation is advantageous as the gravity helps or causes the extension of the pipe towards its active state.

In an example, the extension causing device comprises at least part of the structural constituents of the pipe. By "structural constituents" is meant the elements that give the pipe its coherence, its specific appearance and, generally, its rigidity or its resistance. Such structural elements may include an envelope and a frame. In this example, the pipe can then be extended by its own weight.

In an example, the extension causing device comprises at least one weight that does not form part of the structural constituents of the pipe and that is attached to the pipe. Such an added weight assists the extension of the pipe under the effect of gravity, in addition to the pipe own weight.

In an example, the extension causing device comprises a pneumatic device which includes a gas release device and an actuator that is activated by the gas released by said gas release device. For example, the gas release device can include a compressed air canister or can make use of a compressed air system of the vehicle. The actuator may include an inflatable pouch which, when inflated, moves the second end of the pipe away from the first end.

The sensor can be one of a pressure sensor, a temperature sensor, a gas sensor, a thermal runaway sensor.

The sensor can be located inside the battery pack housing. Alternatively or in addition, the or another sensor can be located outside the battery pack housing, for example secured to said housing, preferably close to an exhaust port.

The pipe may comprise a cylindrical envelope made of a flexible material such as fabric, and a frame which for example comprises rings attached to the envelope and spaced apart from one another along the pipe axis.

The envelope is preferably heat resistant or fire resistant. The term "cylindrical" does not mean that the pipe cross-section is necessarily circular. Anyway, in an example, the envelope is substantially tubular. The frame may have several functions such as support the envelope, contribute to confer the required shape in active state, and/or trigger the pipe extension by its weight.

The pipe can be straight (i.e. cylindrical, for example tubular) or with at least one curved portion. For example, the pipe can be C-shaped or S-shaped. The pipe shape may depend on the location of the safe zone with respect to the pipe first end.

The battery arrangement may further comprise a lock for maintaining the pipe in the inactive state. The lock can be unlocked upon detection of said failure, for allowing the pipe to be placed in the active state. The lock can include a panel behind which the pipe is maintained in a collapsed shape against the battery pack. Alternatively, the lock may comprise a member attached to the battery pack and movable between a locking position and an unlocking position.

The pipe may be secured to the housing of the battery pack, the pipe first end being secured around the exhaust port. Alternatively, the battery arrangement may further comprise an outer casing which receives the battery pack housing, wherein the pipe first end is secured to the outer casing. Such an outer casing may be called an encapsulation.

The battery arrangement may further comprise a controller which is operatively connected to the sensor and which, upon detection of said failure, is configured to allow or to provoke the extension causing device to place the pipe in the active state. Said controller can be the vehicle electronic control unit (ECU). The controller can process the data provided by the sensor and determine on the basis of this data if a thermal runaway, or other failure, is occurring. The controller may command the unlocking of the lock, if such a lock is provided.

According to a second aspect, the disclosure concerns a vehicle comprising at least one battery arrangement as previously described. The safer zone can be located under the battery pack or under the vehicle.

According to a third aspect, the disclosure concerns a method for securing a vehicle including at least one battery pack in case of a failure such as a thermal runaway of said battery pack, the method comprising:
- providing a pipe having open ends, namely a first end which is secured to the battery pack so as to collect the gases emitted through an exhaust port of said battery pack, and a second end, the pipe being in an inactive state in which it is collapsed so as to occupy a small space,
- monitoring a parameter suitable for detecting said failure of the battery pack,
- upon detection of such a failure, allowing or provoking an extension causing device to place the pipe in an active state in which the pipe is extended so that the gases can flow through the pipe and exit it at the second end then located away from the first end.

The pipe may reach its active state by its own weight, and/or with the assistance of at least one added weight, and/or by means of a pneumatic device. The monitored parameter can be one of the pressure, the temperature, the presence of a gas, the occurrence of a thermal runaway. Upon detection of said failure, the method may comprise unlocking a lock which maintains the pipe in the inactive state, for allowing the pipe to be placed in the active state.

The above aspects, accompanying claims, and/or examples disclosed herein above and later below may be suitably combined with each other as would be apparent to anyone of ordinary skill in the art.

Additional features and advantages are disclosed in the following description, claims, and drawings, and in part will be readily apparent therefrom to those skilled in the art or recognized by practicing the disclosure as described herein. There are also disclosed herein control units, computer readable media, and computer program products associated with the above discussed technical benefits.

### BRIEF DESCRIPTION OF THE DRAWINGS

With reference to the appended drawings, below follows a more detailed description of aspects of the disclosure cited as examples.
Figure 1 is a schematic perspective view of a vehicle comprising a battery arrangement according to one example.
Figure 2 is a schematic and exemplary perspective view of a battery pack of a battery arrangement.
Figure 3 is a schematic drawing of a battery arrangement including a safety system comprising a pipe in the inactive state.
Figure 4 is a drawing similar to figure 3, with the pipe in the active state after detection of a failure such as a thermal runaway.
Figure 5a is a schematic drawing of an example of the pipe in the inactive state and figure 5b schematically shows the same pipe in the active state.
Figure 6a is a schematic drawing of another example of the pipe in the inactive state and figure 6b schematically shows the same pipe in the active state.
Figure 7a is a schematic drawing of a safety system comprising a pipe and an example of an extension causing device, with the pipe in the inactive state, and figure 7b schematically shows the same safety system with the pipe in the active state.
Figure 8a is a schematic drawing of a safety system comprising a pipe and another example of an extension causing device, with the pipe in the inactive state, and figure 8b schematically shows the same safety system with the pipe in the active state.
Figure 9a is a schematic drawing of a safety system comprising a pipe and another example of an extension causing device, with the pipe in the inactive state, and figure 9b schematically shows the same safety system with the pipe in the active state.
Figure 10 is a schematic and exemplary perspective view of another battery pack of a battery arrangement, with the pipe of the safety system in the active state.

### DETAILED DESCRIPTION

Aspects set forth below represent the necessary information to enable those skilled in the art to practice the disclosure.

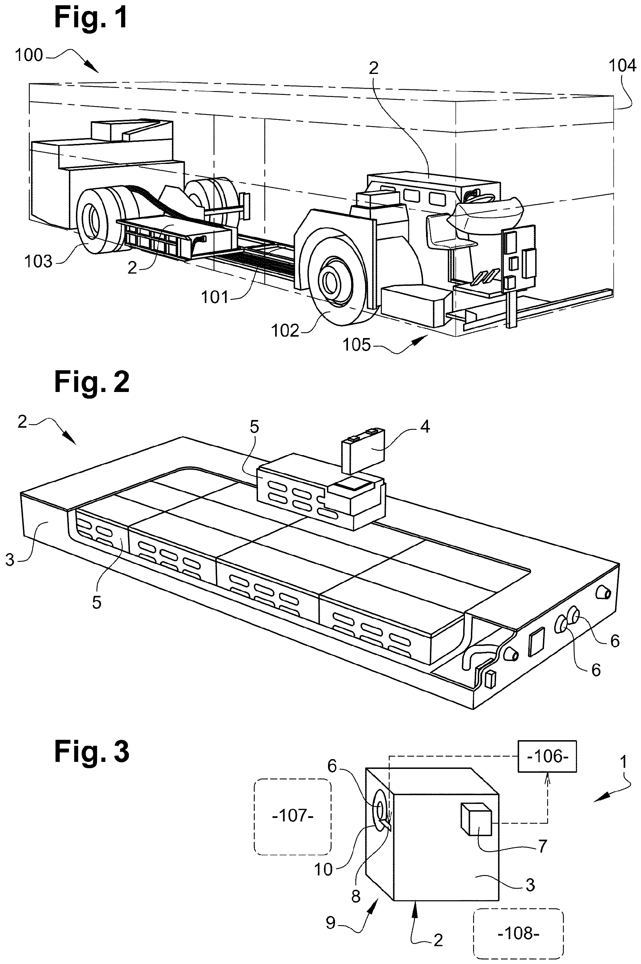

Figure 1 schematically shows a vehicle 100 according to an example of the disclosure.

The vehicle 100 shown in figure 1 is a bus. Alternatively the vehicle could be an industrial vehicle such as a truck. The vehicle 100 comprises a frame 101 supported by front wheels 102 and rear wheels 103, and a body 104. A driver unit 105 is mounted on the frame 101. The vehicle 100 also comprises an electronic control unit (ECU) 106. The vehicle 100 comprises at least one battery arrangement 1. Electronic control is for example inside the battery arrangement 1.

As shown in figure 2, a battery arrangement 1 comprises at least one battery pack 2 including a housing 3 and a plurality of cells 4 received in the housing 3. More specifically, in an example, the battery pack 2 includes several modules 5 arranged in a square array, each module 5 comprising several cells 4. The battery pack 2 may be a lithium ion battery. The housing 3 has at least one exhaust port 6 through which gases emitted by the cells 4 can flow out of the housing in case of a failure such as a thermal runaway or another incident. Each exhaust port 6 may be equipped with a valve, such as an umbrella valve or a burst disk, ensuring water tightness in normal conditions while allowing the outward flow of gases in case of an accident.

In the example shown in figure 1, the vehicle 100 comprises one battery arrangement 1 near the driver unit 105 and battery arrangement 1 near the rear wheels 103.

The battery arrangement 1 also comprises a sensor 7 configured to enable detecting said failure of the battery pack 2. For example, the sensor 7 may monitor a parameter suitable for detecting said failure of the battery pack 2. The sensor 7 can be a pressure sensor, a temperature sensor, a gas sensor, or a thermal runaway sensor. The sensor 7 can be located inside the housing 3 or can be located outside the housing 3 and attached to it, preferably near the exhaust port 6.

The sensor 7 may be operatively connected to the ECU 106 of the vehicle or to another controller. Therefore, on the basis of the information provided by the sensor 7, the ECU 106 is capable of detecting a thermal runaway or another failure. In such an example, upon detection of such a failure, the ECU 106 is configured to activate a safety system 9, for securing the vehicle 100 as well as the surrounding people and equipment.

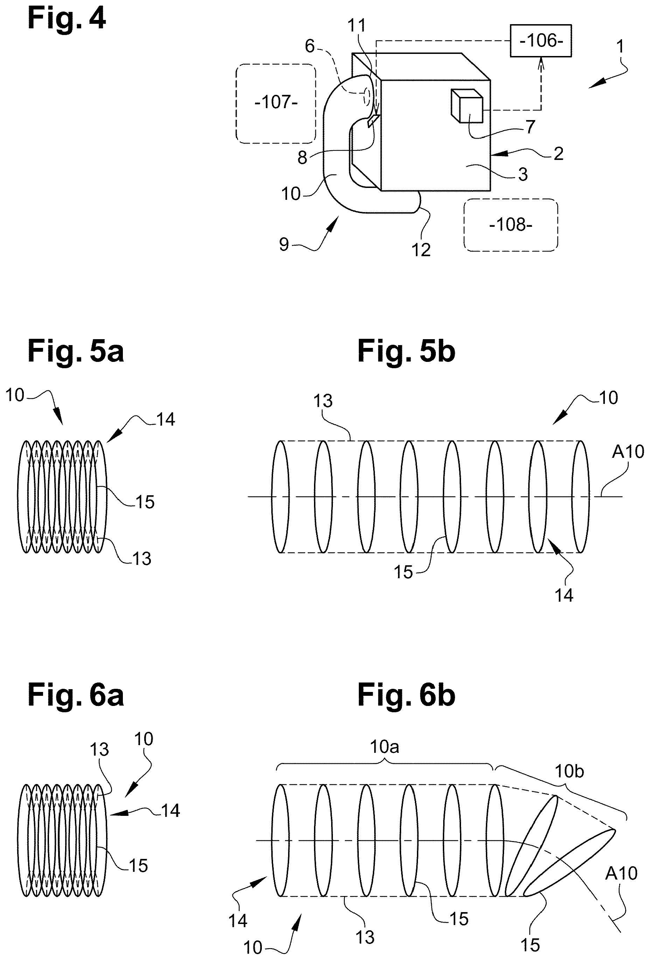

According to the disclosure, the safety system 9 comprises a pipe 10 having open ends, namely a first end 11 which is secured to the battery pack 2 so as to collect the gases emitted through the exhaust port following the failure, and a second end 12. The pipe 10 can be in an inactive state in which it is collapsed so as to occupy a small space, as schematically shown in figure 3. This is advantageous in normal conditions, as the space available around the battery pack 2 and surrounding vehicle components can be fairly limited. The pipe 10 can further be in an active state, schematically shown in figure 4, in which the pipe 10 is extended so that the gases can flow through it and exit it at the second end 12 then located away from the first end 11.

Thus, the gases are preventing from reaching a sensitive area 107 towards which they would flow in the absence of the safety system 9 according to the disclosure. Such a sensitive area can be close to an evacuation route, or to an equipment that could be damaged by the gases or that could cause an explosion or another accident. On the contrary, owing to the safety system 9, the gases are directed towards a safer zone, which is preferably a non-sensitive area 108, far enough from people or sensitive equipment to avoid subsequent accidents. In an example, the non-sensitive area 108 can be located under the vehicle 100.

The safety system 9 further comprises an extension causing device 20 which is configured to place the pipe 10 in the active state upon detection of said failure. As will be explained hereinafter in more detail, the extension of the pipe 10 is not achieved by the flow of gases exiting the exhaust port 6, or at least not by this flow alone.

As shown in figure 3, in the inactive state, the second end 12 of the pipe 10 may be substantially adjacent the first end 11 of the pipe 10 and/or can face the first end 11. For example, the pipe 10 can be folded or rolled, or otherwise packaged. In figure 3, the pipe is collapsed against the housing 3 of the battery pack 2, around the exhaust port 6.

The battery arrangement 2 may comprise a lock 8 for maintaining the pipe 10 in the inactive state. The lock 8 can be in a locking position, as shown in figure 3, in which the pipe 10 is maintained in the inactive state and is prevented from moving towards or from being placed in its active state. The lock 8 can alternatively be in a unlocking position, as shown in figure 4, in which the pipe 10 is allowed to move towards or to be placed in the active state. In an example, the lock 8 can be unlocked, i.e. placed in its unlocking position, by a command from the ECU 106, upon detection of said failure. Although the lock is depicted as a member pivotally mounted onto the housing 3, other implementation can be envisaged. For example, the lock could include a panel holding the collapsed pipe 10 against the housing 3, wherein the panel can be loosen upon detection of a thermal runaway in order to release the pipe 10.

The pipe 10 may comprise a cylindrical envelope 13 made of a flexible material such as fabric, which is preferably heat resistant or fire resistant. The pipe 10 may further comprise a frame 14 which forms a support for the envelope 13 and contributes to giving the envelope 13 the required shape, especially in the active state. The frame 14 for example comprises several distinct rings 15 which are attached to the envelope 13 and which are spaced apart from one another along the pipe axis A10. The rings 15 ensures that the cross-section of the pipe 10 is kept in a non-flattened state both in the inactive state and in the active state, and preferably in any intermediate state, which improves performance. Other kinds of spacers could be used for that purpose. As shown in figures 5a to 9b, the pipe 10 may have a non-flattened cross-section which is substantially identical in the inactive state and in the active state.

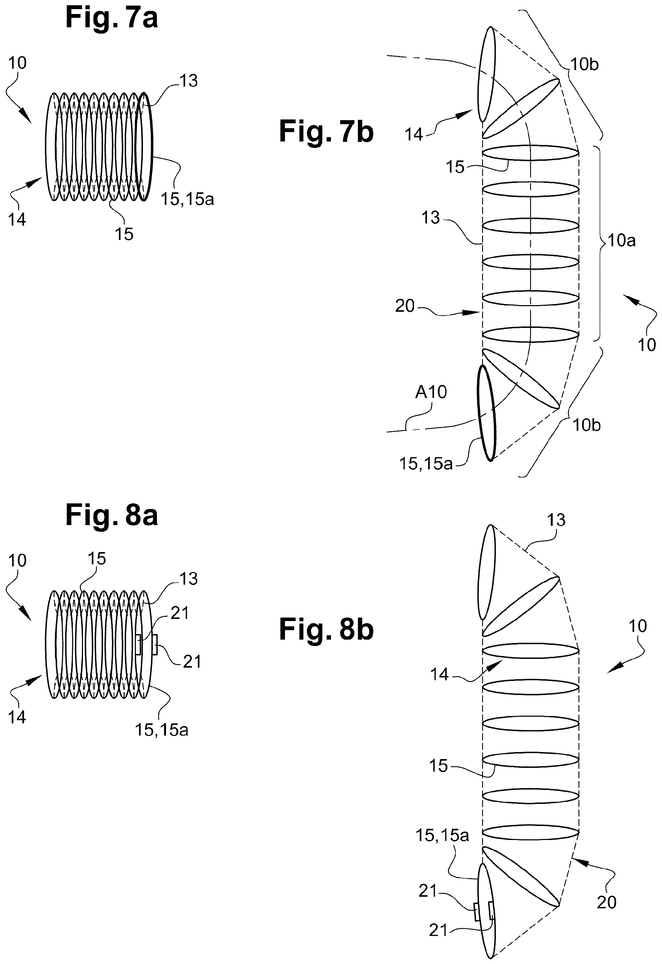

In the example of figures 5a and 5b, the pipe 10 is straight. In the example of figures 6a and 6b, the pipe 10 has a straight portion 10a and a curved portion 10b. The curved shape is determined by the structure of the envelope 13, namely the location of cuts and joint lines, and/or by the position of the rings 15. In the example of figures 7a and 7b, the pipe 10 has a curved portion 10b at its first end 11, then a straight portion 10a, and finally another curved portion 10b at its second end 12, so as to be substantially C-shaped. Furthermore, as shown in figure 7b in which the pipe 10 is in the mounted position on the vehicle 100 and in the active state, the pipe 100 extends at least partly vertically and downwards from its first end 11 towards its second end 12. With such a shape, the pipe acts as a duct to guide the gases under the vehicle frame 3.

Upon detection of a failure of the battery pack 2, such as a thermal runaway, by means of the sensor 7 and the ECU 106, the method for securing the vehicle 100 with the battery arrangement 1 comprises allowing or provoking the extension causing device 20 to place the pipe 10 in an active state. Thus, the pipe 10 is extended so that the gases can flow through the pipe 10 and exit it at the second end 12 which is then located away from the first end 11, in a non-sensitive area 108, away from the sensitive area 107.

The pipe deployment is thus automatically triggered by the detection of said failure, which ensures a quick move of the pipe 10 to the active state. This is all the more important or safety as the progress of thermal runaway can be rapid.

In case a lock 8 is provided, a preliminary step of the pipe deployment is the unlocking of the lock 8. Then, the pipe deployment is achieved by means of the extension causing device 20, either actively or passively.

In an example, as shown in figures 7a and 7b, the pipe 10 is extended by its own weight. In other words, the extension causing device 20 is passive and consists of the structural constituents of the pipe 10, namely the envelope 13 and rings 15 in this example. In order to achieve a quicker pipe deployment, the ring 15a provided at the second end 12 of the pipe 10 can have a weight higher than the one of the other rings 15.

In another example, as shown in figures 8a and 8b, the pipe 10 is extended by its own weight with the assistance of at least one added weight 21. This added weight 21 is not part of the structural constituents of the pipe 10. It can be attached to the ring 15a provided at the second end 12 of the pipe 10. In this example, the extension causing device 20 is passive.

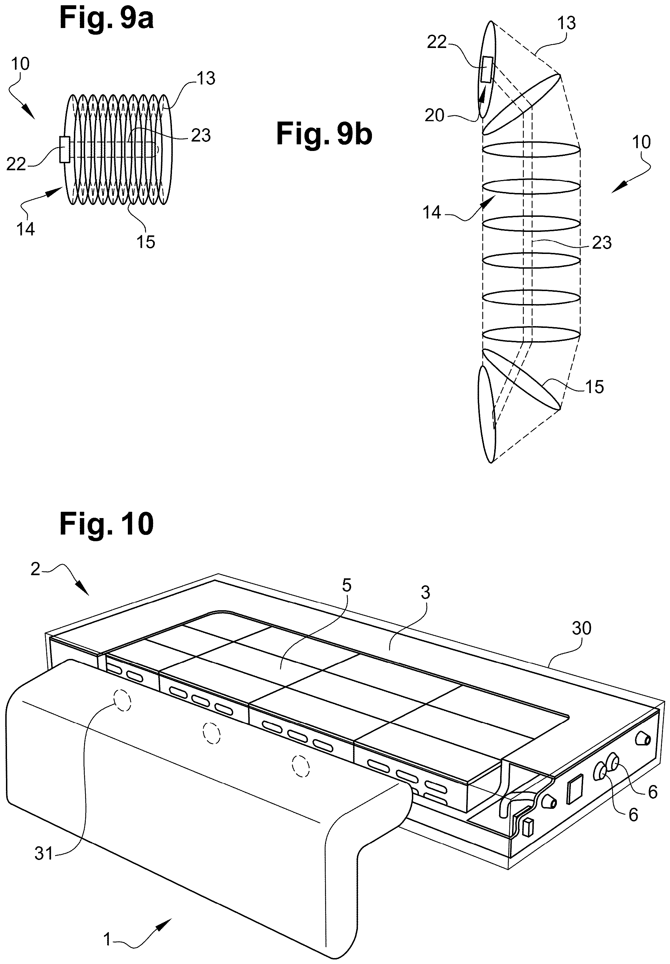

In still another example, as shown in figures 9a and 9b, the extension causing device 20 comprises a pneumatic device which includes a gas release device 22 and an actuator 23 that is activated by the gas released by said gas release device 22. The actuator 23 may include an inflatable pouch which, when inflated, moves the second end 12 of the pipe 10 away from the first end 11. In this example, the extension causing device 20 is active.

Figure 10 shows a variant in which the battery arrangement 1 further comprises an outer casing 30 which receives the battery pack housing 3. In case of a failure leading to the emission of gases by the exhaust ports) 6, these gases flow in the outer casing 30 to holes 31 which open towards the outer environment. In such an example, the pipe first end 10 is secured to the outer casing 30 so as to collect the gases flowing through the holes 31 and lead them to a safer zone.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the inventive concepts being set forth in the following claims.

## Claims

1. A battery arrangement (1) for a vehicle (100), comprising:
- a battery pack (2) including a housing (3) and a plurality of cells (4) received in the housing (3), the housing (3) having at least one exhaust port (6) through which gases emitted by the cells can flow out of the housing (3) in case of a failure such as a thermal runaway,
- a sensor (7) configured to enable detecting said failure of the battery pack (2),
- a safety system (9) comprising:
-- a pipe (10) having open ends, namely a first end (11) which is secured to the battery pack (2) so as to collect the gases emitted through the exhaust port (6), and a second end (12), wherein the pipe (10) can be in an inactive state in which it is collapsed so as to occupy a small space, or in an active state in which it is extended so that the gases can flow through the pipe (10) and exit it at the second end (12) then located away from the first end (11),
-- an extension causing device (20) configured to place the pipe (10) in the active state upon detection of said failure.

2. The battery arrangement of claim 1, wherein, in the inactive state, the second end (12) of the pipe (10) is substantially adjacent the first end (11) and/or facing the first end (11) of the pipe (10), with the pipe (10) preferably being folded or rolled.

3. The battery arrangement of any of claims 1 to 2, wherein the pipe (10) comprises spacers (15) for keeping the cross-section of the pipe (10) in a non-flattened state at least in the active state.

4. The battery arrangement of any of claims 1 to 3, wherein the pipe (10) has a non-flattened cross-section which is substantially identical in the inactive state and in the active state.

5. The battery arrangement of any of claims 1 to 4, wherein, in the mounted position on a vehicle (100) and in the active state, the pipe (10) extends at least partly vertically and downwards from its first end (11) towards its second end (12).

6. The battery arrangement of any of claims 1 to 5, wherein the extension causing device (20) comprises at least part of the structural constituents (13, 15) of the pipe (10).

7. The battery arrangement of any of claims 1 to 6, wherein the extension causing device (20) comprises at least one weight (21) that does not form part of the structural constituents of the pipe (10) and that is attached to the pipe (10).

8. The battery arrangement of any of claims 1 to 7, wherein the extension causing device (20) comprises a pneumatic device which includes a gas release device (22) and an actuator (23) that is activated by the gas released by said gas release device (22).

9. The battery arrangement of any of claims 1 to 8, wherein the sensor (7) is one of a pressure sensor, a temperature sensor, a gas sensor, a thermal runaway sensor.

10. The battery arrangement of any of claims 1 to 9, wherein the pipe (10) comprises a cylindrical envelope (13) made of a flexible material such as fabric, and a frame (14) which for example comprises rings (15) attached to the envelope (13) and spaced apart from one another along the pipe axis (A10).

11. The battery arrangement of any of claims 1 to 10, further comprising a lock (8) for maintaining the pipe (10) in the inactive state, wherein the lock (8) can be unlocked upon detection of said failure, for allowing the pipe (10) to be placed in the active state.

12. The battery arrangement of any of claims 1 to 11, further comprising an outer casing (30) which receives the battery pack housing (3), wherein the pipe first end (11) is secured to the outer casing (30).

13. The battery arrangement of any of claims 1 to 12, further comprising a controller (106) which is operatively connected to the sensor (7) and which, upon detection of said failure, is configured to allow or to provoke the extension causing device (20) to place the pipe (10) in the active state.

14. A vehicle (100) comprising at least one battery arrangement (1) according to any of claims 1 to 13.

15. A method for securing a vehicle (100) including at least one battery pack (2) in case of a failure such as a thermal runaway of said battery pack (2), the method comprising:
- providing a pipe (10) having open ends, namely a first end (11) which is secured to the battery pack (2) so as to collect the gases emitted through an exhaust port (6) of said battery pack (2), and a second end (12), the pipe (10) being in an inactive state in which it is collapsed so as to occupy a small space,
- monitoring a parameter suitable for detecting said failure of the battery pack (2),
- upon detection of such a failure, allowing or provoking an extension causing device (20) to place the pipe (10) in an active state in which the pipe (10) is extended so that the gases can flow through the pipe (10) and exit it at the second end (12) then located away from the first end (11).
